# EUROPÄISCHE PATENTANMELDUNG

(11) **EP 4 796 275 A1**
(43) Veröffentlichungstag der Anmeldung: **26.08.2026**
(21) Anmeldenummer: 26158464.3
(22) Anmeldetag: 13.02.2026
(51) Int. Cl.: B26D 1/02, B26D 1/06, B26D 5/00, B26D 7/26, B26D 1/04, B29D 30/46, B23D 15/00, B23D 36/00

(54) **SCHNEIDEINRICHTUNG ZUM SCHNEIDEN EINES BANDFÖRMIGEN MATERIALS SOWIE VERFAHREN ZUR EINSTELLUNG EINES SCHNEIDSPALTS ZWISCHEN EINEM OBERMESSER UND EINEM UNTERMESSER EINER DERARTIGEN SCHNEIDEINRICHTUNG**

(30) Priorität: 25.02.2025 DE 102025107143
(71) Anmelder: Fischer TireTech Germany GmbH, 96224 Burgkunstadt (DE)
(72) Erfinder: Schmidt, Frank, 95349 Thurnau (DE)
(74) Vertreter: Lindner Blaumeier Patent- und Rechtsanwälte

(57) **Zusammenfassung**

Schneideinrichtung zum Schneiden eines bandförmigen Materials, insbesondere eines klebrigen Cordbands, umfassend ein balkenförmiges Untermesser (5) und ein balkenförmiges Obermesser (6), das zum Schneiden vertikal bezüglich des positionsfesten Untermessers (5) bewegt wird, wobei das Untermesser (5) an einem Messerträger (3) angeordnet ist, welcher Messerträger (3) linear und horizontal bewegbar an einem Einrichtungsgestell (2) gelagert ist und über Stellmittel (8) linear derart bewegbar ist, dass die Position des Untermessers (5) relativ zum Obermesser (6) veränderbar und ein zwischen beiden gegebener Schneidspalt (S) einstellbar ist, sowie eine Einrichtung zur Erfassung der horizontalen Bewegung des Untermessers (5) relativ zum Obermesser (6), wobei die Einrichtung wenigstens einen Sensor (9) umfasst, über den ein, ein Maß für den über die Stellmittel (8) erwirkten Bewegungsweg des Messerträgers (3) darstellendes, Sensorsignal erfassbar und an eine Verarbeitungseinrichtung (11) gebbar ist, die zur Ermittlung einer den Bewegungsweg angebenden Weginformation basierend auf dem Sensorsignal eingerichtet ist, wobei die Weginformation an einer Anzeigeeinrichtung (12) ausgebbar ist.

## Beschreibung

Die Erfindung betrifft eine Schneideinrichtung zum Schneiden eines bandförmigen Materials, insbesondere eines klebrigen Cordbands, umfassend ein balkenförmiges Untermesser und ein balkenförmiges Obermesser, das zum Schneiden vertikal bezüglich des positionsfesten Untermessers bewegt wird, wobei das Untermesser an einem Messerträger angeordnet ist, welcher Messerträger linear und horizontal bewegbar an einem Einrichtungsgestell gelagert ist und über Stellmittel linear derart bewegbar ist, dass die Position des Untermessers relativ zum Obermesser veränderbar und ein zwischen beiden gegebener Schneidspalt einstellbar ist, sowie eine Einrichtung zur Erfassung der horizontalen Bewegung des Untermessers relativ zum Obermesser.

Schneideinrichtungen der beschriebenen Art kommen beispielsweise im Rahmen der Reifenherstellung zum Einsatz. Sie dienen dazu bandförmiges Material, insbesondere ein klebriges Cordband, entweder Stahlcord oder Textilcord, zu schneiden. Unter dem Begriff "Schneideinrichtung" werden dabei unterschiedliche Maschinentypen verstanden. Diese werden grob in Scheren und Slitter unterteilt. Als Schere kommt hierbei beispielsweise eine Guilottinen-Schere, also eine Schlagschere mit einem balkenförmigen, vertikal bewegbaren Obermesser und einem balkenförmigen, positionsfesten Untermesser, wie sie vorliegend betrachtet wird, eine Rundmesser- oder Rollenschere mit einem rotierenden, horizontal bewegbaren Rundmesser und einem positionsfesten Messerbalken, oder eine Schere mit einem schnell rotierenden Sägemesser zum Einsatz. Diese Scheren dienen dazu, von einem Endlosband einzelne Bandabschnitte abzuschneiden. Verschiedene solcher Scheren sind beispielsweise in DE 20 2013 103 082 U beschrieben. Ein Slitter dient dazu, ein Endlosband längs zu teilen, sodass zwei oder mehr Teilbänder entstehen. Hier kommen zumeist zwei das Material trennende, miteinander zusammenwirkende Rundmesser zum Einsatz.

Unabhängig vom Typ der Schneideinrichtung unterliegen die jeweiligen Messersysteme einem gewissen Verschleiß. Je nach Beanspruchung und Abnutzung müssen daher entsprechende Wartungs- bzw. Justierungsarbeiten vorgenommen werden.

Vorliegend wird eine Schneideinrichtung in Form einer Guillotine-Schere mit einem balkenförmiges Untermesser und einem vertikal bewegbaren, balkenförmigen Obermesser betrachtet. Im Laufe des Betriebs unterliegen die beiden Messer einem gewissen Verschleiß. Je nach Abnutzung und Beanspruchung ändert sich dabei der ursprünglich eingestellte Schneidspalt zwischen beiden Messern. Dieser Schneidspalt trennt das Untermesser von dem an ihm vertikal vorbeigeführten Obermesser, wobei während des Schnitts im Schneidspalt das Bandmaterial, das geschnitten werden soll, aufgenommen wird. Ändert sich der Schneidspalt in seiner Breite ausgehend von einer bezüglich des zu schneidenden Bandmaterials eingestellten, idealen Breite, so leidet hierunter die Schnittqualität, was bis zur Produktion von Ausschussmaterial führen kann.

Von daher ist, wenn sich verschleißbedingt die Breite des Schneidspalts geändert hat, der Schneidspalt neu einzustellen. Dies erfolgt bei bekannten Schneideinrichtungen manuell nach vorheriger optischer Überprüfung der Breite des Schneidspalts durch das Wartungspersonal. Für diese Prüfung prüft und vermisst die Person den Schneidspalt mittels eines optischen Messgeräts, auch Spion genannt, und kann so die konkrete Spaltbreite bestimmen. Zur Ermöglichung der Spalteinstellung ist das Untermesser horizontal beweglich angeordnet, kann also horizontal bezüglich des in horizontaler Richtung positionsfesten Obermessers verstellt werden. Wie beispielsweise in DE 20 2013 103 082 U1 beschrieben, ist das Untermesser regelmäßig fest an einer Seite einer Tischplatte, die der Auflage des Bandmaterials dient, angeordnet, wobei die Tischplatte und mit ihr das Untermesser verstellbar ist. Hierzu ist die Tischplatte horizontal schwimmend im Einrichtungsgestell gelagert, in der jeweiligen axial in oder gegen die Bandtransportrichtung eingenommenen Position kann sie entsprechend arretiert, beispielsweise geklemmt werden. An der dem Untermesser gegenüberliegenden Seite der Tischplatte sind zumeist zwei Stelleinrichtungen umfassend zu drehende Stellmuttern, jeweils links und rechts, angeordnet, über die eine Feineinstellung der axialen Bewegung möglich ist. Mit einer solchen Stelleinrichtung an der jeweiligen Seite kann die Position der Tischplatte in der Längsrichtung eingestellt und korrigiert werden, womit die der Schneidspalt und der Verlauf des Untermessers zum Obermesser eingestellt wird. Die Stellmuttern sind über Federelemente bzw. Federpakete vorgespannt, die eine definierte Gegenkraft zwischen der Tischplatte und dem Einrichtungsgestell aufbringen. Je nach Drehrichtung der Stellschrauben kann somit das Untermesser durch Verstellen der Tischplatte fein eingestellt werden und der Schneid- oder Schnittspalt vergrößert oder verkleinert werden. Die Veränderung der Breite des Schneidspalts im Rahmen dieser Einstellung oder Justierung ist in der Regel sehr gering, die Verstellung erfolgt zumeist im Bereich von ca. 0,002-0,2 mm.

Um diesen geringen Bewegungsweg erfassen zu können, wird eine geeignete mechanische Messvorrichtung in Form einer Messuhr verwendet, die einen Taststift und eine mechanische Anzeige aufweist, wobei die Messvorrichtung positionsfest am Einrichtungsgestell angeordnet ist und der Taststift an der Tischplatte anliegt. Eine entsprechende Tischplattenbewegung wird über den Taststift erfasst und an der mechanischen, also analogen Anzeige der Messuhr angegeben, wo sie das Wartungspersonal abliest. Diese Art der Erfassung und laufenden Überprüfung der Stellbewegung über die Messvorrichtung gestaltet sich zeitaufwendig und zum Teil schwierig, da häufig kein einfacher Zugang zu der Messvorrichtung zum Ablesen der angezeigten Werte aufgrund der Kompaktheit der Schneideinrichtung in diesem Bereich sowie der Breite der Schneideinrichtung gegeben ist. Von daher ist diese Wartung mit einem hohen Aufwand verbunden und bedarf der sorgfältigen Planung.

Der Erfindung liegt damit das Problem zugrunde, eine demgegenüber verbesserte Schneideinrichtung anzugeben.

Zur Lösung des Problems ist bei einer Schneideinrichtung der eingangs genannten Art erfindungsgemäß vorgesehen, dass die Einrichtung wenigstens einen Sensor umfasst, über den ein, ein Maß für den über die Stellmittel erwirkten Bewegungsweg des Messerträgers darstellendes, Sensorsignal erfassbar und an eine Verarbeitungseinrichtung gebbar ist, die zur Ermittlung einer den Bewegungsweg angebenden Weginformation basierend auf dem Messwert eingerichtet ist, wobei die Weginformation an einer Anzeigeeinrichtung ausgebbar ist.

Die Erfindung sieht die Anordnung eines einen Messwert in Form eines elektrischen Sensorsignals liefernden Sensors vor, welches Sensorsignal ein Maß für den Bewegungsweg des Untermessers in horizontaler Richtung relativ zum Obermesser ist. Das Sensorsignal wird einer mit dem Sensor verbundenen Verarbeitungseinrichtung gegeben, die das Sensorsignale mit einem geeigneten Verarbeitungsalgorithmus verarbeitet und basierend darauf eine Weginformation, die die tatsächliche Bewegungslänge, die das Untermesser über die Stellmittel verschoben wurde, wiedergibt, ermittelt. Diese Weginformation beschreibt also den tatsächlichen Verstellweg des Untermessers über die Stellmittel. An einer Anzeigeeinrichtung, die mit der Verarbeitungseinrichtung kommuniziert, wird dieser Wert sodann ausgegeben. Da diese Anzeigeeinrichtung an einer beliebigen Position angeordnet werden kann, wo sie für das Wartungspersonal, das über die Stellmittel die Messerverstellung vornimmt, einsehbar ist, kann folglich die Justierung auf einfache Weise erfolgen.

Üblicherweise wird werkseitig der Schneidspalt auf einen idealen Ausgangswert eingestellt, d. h., dass das Untermesser werkseitig in eine definierte Ausgangsposition gebracht wird, was durch entsprechende Einstellung der Position der Tischplatte über die Stellmittel vorgenommen wird. Die Tischplatte wird sodann in dieser Ausgangsposition festgestellt. Ergibt sich im Rahmen einer optischen Kontrolle über das optische Messmittel wie den bereits beschriebenen Spion, über den der Bereich des Schneidspalts einsehbar ist und eine Spaltvermessung möglich ist, dass der Schneidspalt nicht mehr die definierte Ausgangsbreite aufweist, also sich die beiden Messer nicht mehr in der Ausgangsposition befinden, so wird das Wartungspersonal die Justierung vornehmen. Der Sensor, der sodann die entsprechende Information für die Stellbewegung vornimmt, erfasst ausgehend von der gegebenen Ausgangsposition des Untermessers bzw. der Tischplatte, die, aus Sicht des Sensors, eine 0-Position ist, den entsprechenden Bewegungsweg, der zur Verkleinerung des Schneidspalts in Richtung des Obermessers läuft, und zur Vergrößerung des Schneidspalts entgegengesetzt dazu. Es wird also nicht die eigentliche Spaltbreite erfasst und ausgegeben, sondern lediglich der tatsächliche Bewegungsweg des Untermessers respektive der Tischplatte, ausgehend von der Position zu Beginn des Einstellvorgangs, welche Position für den Sensor eine 0-Position ist. Für das Wartungspersonal ist damit diese Justierungsvorgang aufgrund der wesentlich einfacheren Kontrolle der Verstellung deutlich einfacher, wie auch durch die elektronische bzw. digitale Erfassung des Bewegungsweg über den Sensor die Wegerfassung auch deutlich genauer ist, sodass auch Verstellungen im Mikrometerbereich hochpräzise erfasst und vorgenommen werden können.

Denkbar ist es dabei, dass das Sensorsignal automatisch bei Beginn einer über die Stellmittel erwirkten Stellbewegung erfassbar ist. Wird also eine Verstellung vorgenommen, so wird unmittelbar mit Beginn derselben die Signalaufnahme und damit die Wegerfassung eingeleitet und werden die kontinuierlich in Echtzeit erfassten entsprechenden Sensorsignale erfasst und von der Verarbeitungseinrichtung die Weginformationen in Echtzeit ermittelt und ausgegeben. Alternativ ist es denkbar, dass das Sensorsignal bei über die Verarbeitungseinrichtung erfolgender nutzerseitiger Gabe eines Erfassungsbefehls erfassbar ist. Der Nutzer gibt also an der Verarbeitungseinrichtung bzw. einem entsprechenden Eingabemittel, beispielsweise auch der Anzeigeeinrichtung, sofern diese als Touchscreen ausgeführt ist, einen entsprechenden Befehl ein, dass er einen Justiervorgangs vornehmen möchte, was dazu führt, dass der Sensor angesteuert wird und entsprechende Sensorsignale liefert und die Wegmessung vorgenommen wird.

Denkbar ist es, dass pro Justiervorgang eine Verstellung nur über einen begrenzten, vorab definierten Stellweg möglich ist. Dies dient dazu, zu verhindern, dass ein zu großer Stellweg versehentlich eingestellt wird, und es bei Wiederinbetriebnahme zu einer Beschädigung des Messersystem kommt. Beispielsweise kann der maximale Verstellweg innerhalb eines Justierungsvorgangs auf max. 0,06 mm begrenzt werden. Um zu vermeiden, dass dieser maximale Stellweg überschritten wird, kann in Weiterbildung der Erfindung vorgesehen sein, dass die Verarbeitungseinrichtung zum Vergleichen des Sensorsignals oder der ermittelten Weginformation mit einem Referenzsignal oder einer Referenzinformation und zur Ausgabe des Vergleichsergebnisses an der Anzeigeeinrichtung eingerichtet ist. Dieser maximale zulässige Stellweg kann also als Referenz dienen, bezüglich welcher ein kontinuierlicher Vergleich des Ist-Stellwegs vorgenommen wird. Ist beispielsweise der Ist-Stellweg gleich der Referenz, so kann ein entsprechendes Alarmsignal gegeben werden, das anzeigt, dass die weitere Justierung unterbleiben soll. Dabei kann die Verarbeitungseinrichtung entweder unmittelbar das Sensorsignal mit einem Referenzsignal vergleichen, oder die ermittelte Weginformation mit einer Referenzinformation, also dem konkreten maximalen Wert des zulässigen Stellwegs.

Die ermittelte Weginformation wird dann als Zahlenwert an der Anzeigeeinrichtung ausgegeben. Da der Sensor die Stellbewegung kontinuierlich erfasst, wird somit laufend der angezeigte Wert aktualisiert, d. h., dass in Echtzeit der Ist-Stellweg dem Wartungspersonal angezeigt wird, sodass hochgenau erkannt werden kann, um wieweit die Verstellung erfolgt ist und ob das Stellziel erreicht ist. Der Stellweg ist wie beschrieben regelmäßig sehr klein, er liegt zum Teil im Mikrometerbereich. Mit der Ausgabe des Zahlenwerts kann auch eine Farbinformation verbunden sein. Ist beispielsweise eine Obergrenze für die maximale Verstellung von 0,06 mm gesetzt, die nicht überschritten werden soll, so kann, solange der Ist-Stellweg kleiner als 0,06 mm ist, die Anzeige beispielsweise grün hinterlegt sein, bei Erreichen der Stellgrenze von 0,06 mm kann die Anzeige auf eine rote Hinterlegung umschalten. Denkbar ist es auch, bei Annäherung an die Stellgrenze, beispielsweise mit Erreichen eines Stellwegs von 0,05 mm, die Anzeige auf gelb umzuschalten, sodass das Personal kurz vor dem Erreichen der Justiergrenze gewarnt wird. Es kann also eine Art Ampelsystem bezüglich der zusätzlichen Farbinformation vorgesehen werden.

Alternativ zur Anzeige eines konkreten Zahlenwerts ist es auch denkbar, die Weginformation in Form einer graphischen Darstellung wiederzugeben, z.B. als Balkendiagramm, das eine Wegskalierung z.B. von 0,0 mm - 0,06 mm aufweist, und dem eine Markierung in Form eines Zeigers zugeordnet ist, der auf den gestellten Skalierungswert zeigt. Auch andere graphische Darstellungen, die die veränderliche Weginformation wiedergeben, sind natürlich denkbar.

Denkbar ist es auch, dass die Verarbeitungseinrichtung für eine Veränderung des Schneidspalts zur Ermittlung einer mittels der Stellmittel zu erwirkenden Bewegungslänge zum Verstellen des Untermessers eingerichtet ist, die an der Anzeigeeinrichtung ausgebbar ist. Seitens der Verarbeitungseinrichtung kann mittels eines geeigneten Verarbeitungsalgorithmus zusätzlich auch ermittelt werden, welcher konkrete Stellweg im anstehenden Verstellvorgang gestellt werden soll, um den Schneidspalt wieder auf ein Maß zu justieren, das zum Schneiden des Bandmaterials ideal bzw. zu bevorzugen ist. Hierzu kann beispielsweise der vom Personal vor Beginn des Stellvorgangs durch eine optische Kontrolle und Vermessung ermittelte Wert der tatsächlichen Breite des Schneidspalts an einer Eingabeeinrichtung eingegeben werden, woraufhin die Verarbeitungseinrichtung, zweckmäßigerweise unter Berücksichtigung von Materialparametern des zu schneidenden Bandmaterials wie dem Bandtyp (Textilcord oder Stahlcord), der Banddicke, der Bandbeschaffenheit und ähnlichem ein ideales Breitenmaß für den Schneidspalt ermittelt und, ausgehend vom eingegebenen Ist-Breitenwert und dem Soll-Breitenwert, den vorzunehmenden Stellweg bestimmt und ausgibt. Das Wartungspersonal kann daraufhin unter kontinuierlicher Sensorüberwachung die Verstellung exakt vornehmen, sodass der gewünschte Zielwert erreicht wird.

In Weiterbildung der Erfindung können die Stellmittel zwei separate Stelleinrichtungen umfassen, die mit dem Messerträger im Bereich seiner seitlichen Enden gekoppelt sind und die separat betätigbar sind. Wie beschrieben kommen regelmäßig seitliche Stelleinrichtungen, die bei manueller Betätigung zwei Stellmuttern umfassen, zum Einsatz, über die der Messerträger und damit das Untermesser linear verschoben wird. Zweckmäßig ist es in diesem Zusammenhang, quasi jeder der mechanischen Stelleinrichtungen, also der jeweiligen Stellmechanik, die über eine Stellmutter betätigt wird, einen separaten Sensor zuzuordnen, sodass an beiden Stellpositionen hochgenau der Stellweg ermittelt wird. Dies erlaubt einerseits ein hochgenaues, separates Verstellen an den beiden Endbereichen, wie auch das Einstellen einer definierten Verkippung um eine Vertikalachse oder das Auflösen einer gegebenen Verkippung durch marginal unterschiedliche Stellbewegungen über die beiden separaten Stelleinrichtungen.

Die Stelleinrichtungen selbst können Spindeln mit manuell zu betätigenden Stellmuttern oder über einen jeweiligen Stellmotor betätigbare Spindeltriebe sein. Im Falle einer manuellen Betätigung sind die entsprechenden Stellmuttern vorgesehen, die mit einem geeigneten Werkzeug manuell betätigt werden und über Feingewinde mit der Spindel verbunden sind, sodass eine hochgenaue und präzise Stellung möglich ist. Alternativ ist es auch denkbar, dass Spindeltriebe mit einer Spindel und einer Spindelmutter, die über einen Stellmotor angetrieben wird, wobei auch hier Feingewinde vorgesehen sind, eingesetzt werden. Es sind also unterschiedliche Ausführungen von geeigneten Stelleinrichtungen denkbar, die stets so auszulegen sind, dass hochpräzise Stellwege im Mikrometerbereich möglich sind.

Wie bereits ausgeführt, sind vorteilhaft zwei Sensoren vorgesehen, die horizontal voneinander beabstandet sind. Sie sind also längs des Messerträgers, horizontal gesehen, voneinander beabstandet und zu den Seiten bzw. seitlichen Enden des Messerträgers positioniert. Sie liefern jeweils separate Sensorsignale und werden separat ausgewertet, sodass an zwei Positionen, und bei Einsatz zweier separater Stelleinrichtungen bezüglich jeder Stelleinrichtung, eine genaue Ermittlung des Stellwegs möglich ist. Dies erlaubt es auch hochpräzise unterschiedliche Stellwege an beiden Seiten zu realisieren, beispielsweise über die eine Stelleinrichtung einen Bewegungsweg von 0,02 mm und über die andere Stelleinrichtungen einen Bewegungsweg von 0,03 mm o. ä., sodass letztlich das Untermesser entweder nur horizontal synchron beidseits gestellt werden kann, oder bei Bedarf auch mit einer minimalen Verkippung um eine Vertikalachse.

Der oder jeder Sensor ist bevorzugt als Taststift ausgeführt, umfassend ein Gehäuse sowie einen relativ zum Gehäuse bewegbaren Stift. Der Stift kann also in und aus dem Gehäuse bewegt werden, abhängig von der jeweiligen Verschieberichtung. Mit jeder noch so marginalen Relativbewegung des Stifts zum Gehäuse wird ein positionsspezifisches Sensorsignal generiert, d. h., dass im Gehäuse entsprechende Mess- oder Positionssaufnehmermittel vorgesehen sind, die hochpräzise die Ist-Position des Taststifts relativ zum Gehäuse erfassen, wobei das Sensorsignal sodann der Verarbeitungseinrichtung zur weiteren Verarbeitung gegeben wird.

Alternativ zur Verwendung eines solchen Taststifts ist es auch denkbar, dass der oder jeder Sensor ein lichtoptischer Sensor umfassend ein Gehäuse mit einem einen Abtastlichtstrahl emittierenden und ein Reflexionslicht erfassenden Einrichtung ist. Während der Taststift quasi eine mechanische Abtastung vornimmt, erfolgt über einen lichtoptischen Sensor eine berührungslose Abtastung und damit Wegermittlung. Dieser Sensor weist in einem Gehäuse aufgenommenes Sende- und Empfangsmittel auf, über die ein auf das zu bewegende Bauteil gerichteter Abtastlichtstrahl emittiert und vom Bauteil reflektierte Reflexionsstrahlung erfasst wird, worauf basierend sodann das eigentliche Sensorsignale generiert wird, dass der Verarbeitungseinrichtung gegeben wird.

Dabei kann das Gehäuse mit dem Messerträger verbunden sein und der Stift am Einrichtungsgestell anliegen bzw. der Abtastlichtstrahl auf das Einrichtungsgestell gerichtet sein. D. h., dass das Gehäuse in diesem Fall bewegt wird, während der Stift am Einrichtungsgestell positionsfest anliegt bzw. der Abtastlichtstrahl auf das positionsfeste Einrichtungsgestell gerichtet ist. Selbst verständlich kann die Anordnung auch umgekehrt sein.

Nach erfolgter Justierung ist der Messerträger, also die Tischplatte, in der eingenommenen Endposition wieder zu verankern und demzufolge die eingenommene Position des Untermessers zu fixieren. Hierzu sind geeignete, mechanisch oder hydraulisch betätigbare Klemmmittel vorgesehen, die einerseits für einen Verstellvorgang einfach zu lösen sind, andererseits auch wieder einfach zu verklemmen sind und gleichzeitig eine hinreichende feste Arretierung erlauben.

Neben der Schneideinrichtung selbst betrifft die Erfindung ferner ein Verfahren zur Einstellung eines Schneidspalts zwischen einem Obermesser und einem Untermesser einer Schneideinrichtung zum Schneiden eines bandförmigen Materials, insbesondere eines klebrigen Cordbands, wobei die Schneideinrichtung ein balkenförmiges Untermesser und ein balkenförmiges Obermesser, das zum Schneiden vertikal bezüglich des positionsfesten Untermessers bewegt wird, umfasst, wobei das Untermesser an einem Messerträger angeordnet ist, welcher Messerträger linear und horizontal bewegbar an einem Einrichtungsgestell gelagert ist und über Stellmittel linear derart bewegbar ist, dass die Position des Untermessers relativ zum Obermesser veränderbar und ein zwischen beiden gegebener Schneidspalt einstellbar ist, sowie eine Einrichtung zur Erfassung der horizontalen Bewegung des Untermessers relativ zum Obermesser. Dieses Verfahren zeichnet sich dadurch gekennzeichnet, dass mittels wenigstens eines Sensors der Einrichtung ein, ein Maß für den über die Stellmittel erwirkten Bewegungsweg des Messerträgers darstellendes, Sensorsignal erfasst wird und an eine Verarbeitungseinrichtung gegeben wird, die eine den Bewegungsweg angebenden Weginformation basierend auf dem Messwert ermittelt, wobei die Weginformation an einer Anzeigeeinrichtung ausgegeben wird.

Dabei kann vorgesehen sein, dass das Sensorsignal automatisch bei Beginn einer Stellbewegung über die Stellmittel erfasst wird, also der Erfassungsbetrieb automatisch unmittelbar mit Einleitung der Verstellung beginnt. Alternativ kann vorgesehen sein, dass das Sensorsignal bei über die Verarbeitungseinrichtung erfolgender nutzerseitiger Gabe eines Erfassungsbefehls erfasst wird. Hier wird also der Signalerfassungsbeginn durch die Befehlseingabe getriggert.

Des Weiteren kann seitens der Verarbeitungseinrichtung das Sensorsignal oder die ermittelte Weginformation mit einem Referenzsignal oder einer Referenzinformation verglichen und das Vergleichsergebnis an der Anzeigeeinrichtung ausgegeben werden.

Die dem Wartungspersonal angezeigte Weginformation kann dabei bevorzugt als Zahlenwert an der Anzeigeeinrichtung ausgegeben werden, wobei diesem Wert zusätzlich eine Farbinformation zugeordnet sein kann, die angibt, ob der bereits erwirkte Stellweg innerhalb definierter, zulässiger Stellgrenzen liegt. Alternativ ist auch eine Ausgabe der Weginformation in Form einer graphischen Darstellung denkbar.

Weiterhin kann vorgesehen sein, dass seitens der Verarbeitungseinrichtung die für eine Veränderung des Schneidspalts mittels der Stellmittel zu erwirkenden Bewegungslänge zum Verstellen des Untermessers ermittelt wird, die an der Anzeigeeinrichtung ausgegeben wird.

Als Sensor kann ein Taststift umfassend ein Gehäuse sowie einen relativ zum Gehäuse bewegbaren Stift verwendet werden, oder ein lichtoptischer Sensor umfassend ein Gehäuse mit einer einen Abtastlichtstrahl emittierenden und ein Reflexionslicht erfassenden Einrichtung verwendet werden.

Weitere Vorteile und Einzelheiten der Erfindung ergeben sich aus den im folgenden beschriebenen Ausführungsbeispielen sowie anhand der Zeichnung. Dabei zeigen:
- Fig. 1: eine Prinzipdarstellung einer erfindungsgemäßen Schneideinrichtung in einer Seitenansicht,
- Fig. 2: eine Aufsicht auf eine erfindungsgemäße Schneideinrichtung als Teilansicht unter Darstellung des Messerträgers des Untermessers mit Stellmittel einer ersten Ausführungsform,
- Fig. 3: eine Aufsicht auf eine erfindungsgemäße Schneideinrichtung als Teilansicht unter Darstellung des Messerträgers des Untermessers mit Stellmittel einer zweiten Ausführungsform
- Fig. 4: eine vergrößerte Teilansicht einer erfindungsgemäßen Schneideinrichtung unter prinzipieller Darstellung der Anordnung eines Sensors in Form eines Taststifts,
- Fig. 5-7: Prinzipdarstellungen von Teilansichten einer erfindungsgemäßen Schneideinrichtung zur Darstellung des Verstellvorgangs und einer zugeordneten Anzeigeeinrichtung,
- Fig. 8: eine Teilansicht einer Schneideinrichtung mit einem Messerträger, diesem zugeordnetem Feststellmittel sowie Stellmittel einer ersten Ausführungsform, und
- Fig. 9: eine Teilansicht einer Schneideinrichtung mit einem Messerträger, diesem zugeordnetem Feststellmittel sowie Stellmittel einer zweiten Ausführungsform.

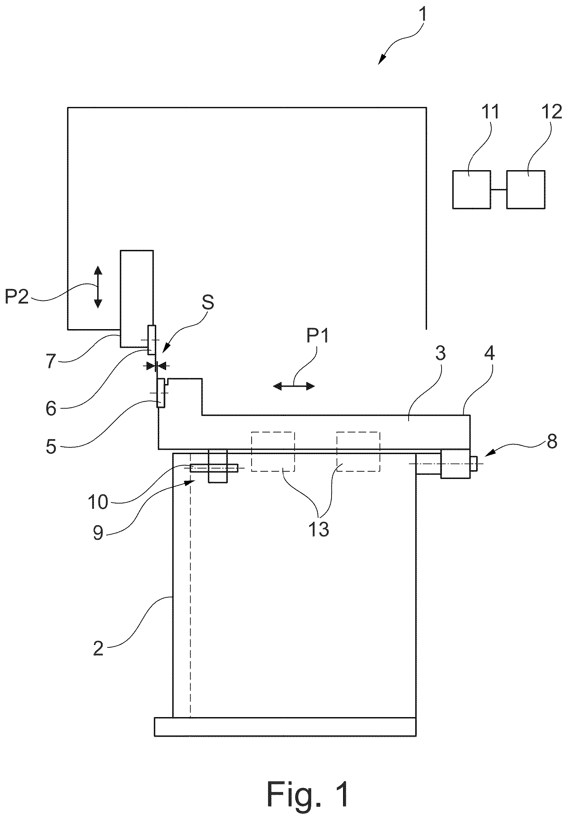

Fig. 1 zeigt eine erfindungsgemäße Schneideinrichtung 1 in Form einer Guillotine-Schere. Die Schneideinrichtung 3 dient dem Schneiden von Bandstücken von einem ihr zugeführten, bandförmigen Endlosmaterial wie einem Textilcordband oder Stahlcordband. Die Schneideinrichtung 1 umfasst ein auch als Maschinenrahmen benennbares Einrichtungsgestell 2, an dem ein Messerträger 3 in Form einer Tischplatte 4, die schwimmend bzw. horizontal, wie durch den Doppelpfeil P1 dargestellt, bewegbar ist, angeordnet ist. An dem Messerträger 3 ist ein balkenförmiges Untermesser 5 angeordnet. Vorgesehen ist des Weiteren eine Obermesser 6, das an einem weiteren Messerträger 7 angeordnet ist, der über nicht näher gezeigte Führungseinrichtungen vertikal bewegbar, wie durch den Doppelpfeil P2 dargestellt, am Einrichtungsgestell 2 geführt ist. Zwischen dem Untermesser 5 von dem Obermesser 6 ist ein Schneidspalt S gegeben, der durch Verstellen der Position des Untermessers 5 durch horizontales Verschieben des Messerträgers 3, also der Tischplatte 4, eingestellt werden kann. Hierzu sind entsprechende Stellmittel 8 vorgesehen, die nachfolgend noch näher beschrieben werden und entweder manuell zu betätigen sind, indem entsprechende Stellmuttern, die auf Feingewindespindeln laufen, verschraubt werden, oder indem über Stellmotoren ein Gewindespindeltrieb, ebenfalls mit Feingewinde, betätigt wird.

Zur hochpräzisen Erfassung einer solchen Stellbewegung ist wenigstens ein Sensor 9 vorgesehen, bei dem es sich bevorzugt um einen Taststift 10 handelt. Über diesen Sensor wird ein, ein Maß für den über die Stellmittel 8 erwirkten Bewegungsweg des Messerträgers 3 und damit des Untermessers 5 darstellendes, elektrisches Sensorsignal erfasst, das an eine mit dem Sensor 9 respektive dem Taststift 10 verbundene Verarbeitungseinrichtung 11 gegeben wird, die basierend auf dem Sensorsignal mittels eines geeigneten Auswertalgorithmus eine den Bewegungsweg angebende Weginformation ermittelt, wobei die Weginformation an einer Anzeigeeinrichtung 12, beispielsweise einem Display, ausgegeben wird. Eine die Verstellung vornehmende Person kann die Anzeigeeinrichtung bestmöglich und bequem einsehen, während sie die Verstellung über die Stellmittel 8 vornimmt, sodass, neben der hochpräzisen Erfassung des Bewegungsweg in elektronischer bzw. digitaler Form, die Betätigung und Wegkontrolle komfortabel ist.

Zur Ermittlung, ob eine Justierung des Untermessers 5 und damit eine Einstellung der Breite des Schneidspalts S erforderlich ist, wird üblicherweise vom Personal eine optische Kontrolle des Schneidspalts S, also eine optische Vermessung vorgenommen, wozu mit einem geeigneten optischen Messinstrument, mithin auch Spion genannt, der Schneidspalt S von der Person optisch betrachtet und vermessen wird. Hierüber kann ermittelt werden, ob und wenn ja in welchem Maß der Schneidspalt S zu korrigieren ist und, resultierend daraus, um welchen Bewegungsweg das Untermesser 5 zu verstellen ist, wobei diese Bewegung entweder bei zu großem Schneidspalt S zum Obermesser 6 hin oder bei zu kleinem Schneidspalt S, bis hin zu einer marginalen Überlappung von Obermesser 6 und Untermesser 5, vom Obermesser 6 weg erfolgt. Nach Feststellung einer erforderlichen Justierung werden Feststellmittel 13, über die der Messerträger 3 positionsfest an dem Einrichtungsgestell 2 arretiert ist, gelöst. Diese Feststellmittel sind bevorzugt mechanisch bzw. hydraulisch betätigbare Klemmmittel. Nach erfolgtem Lösen erfolgt die Justierung des Untermessers 5 über die Stellmittel 8, wobei infolge der kontinuierlichen Erfassung des Bewegungsweg des Messerträgers 3 über den Sensor 9 und die kontinuierliche Anzeige des tatsächlich vorgenommenen Bewegungswegs bzw. Stellvorgangs an der Anzeigeeinrichtung 12 die Person hoch genau kontrollieren kann, wie der Verstellvorgang vonstatten geht und wann die gewünschte Ziel-Verstellung und damit die gewünschte Zielposition des Untermessers 5 erreicht ist. Sodann endet der Verstellvorgang und der Messerträger 3 wird wieder über die Feststellmittel 13 arretiert, sodass die Relativposition des Untermessers 5 zum Obermesser 6 wieder fixiert ist.

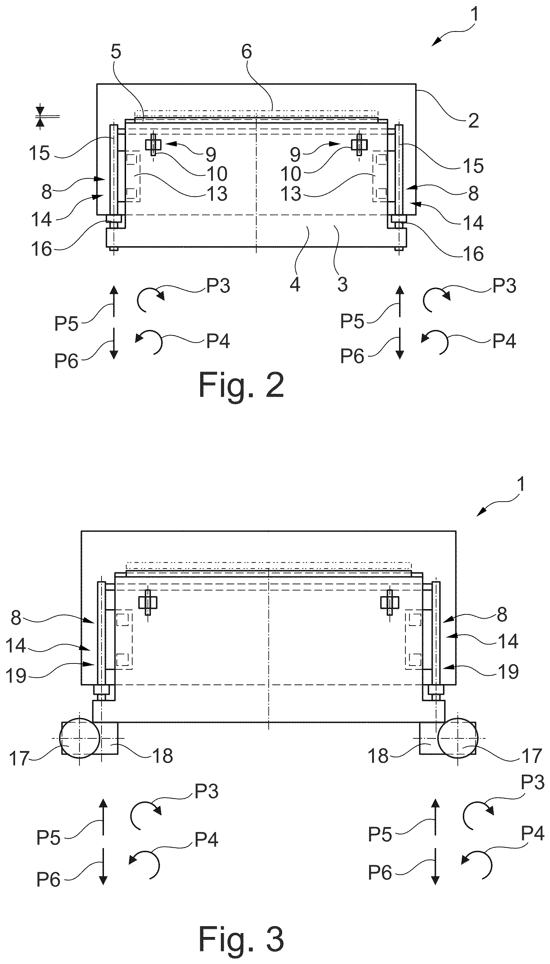

Fig. 2 zeigt eine Aufsicht auf eine Schneideinrichtung 1, wobei hier das Einrichtungsgestell 2 sowie der Messerträger 3 in Form der Tischplatte 4 und das Untermesser 5 dargestellt sind, das Obermesser 6 ist angedeutet. Ebenfalls angedeutet sind beidseits vorgesehene Fixiermittel 13.

Gezeigt sind des Weiteren die Stellmittel 8, die in Form zweier separater Stelleinrichtungen 14 realisiert sind. Die Stelleinrichtungen 14 sind beidseits des Messerträgers 3 angeordnet und sind im gezeigten Ausgangsbeispiel manuell zu bedienen. Vorgesehen ist jeweils eine Feingewindespindel 15, auf der jeweils eine Stellmutter 16 läuft, die manuell zu betätigen ist, um den Messerträger 3 linear und horizontal zu verschieben. Je nach Drehrichtung, die im oder gegen den Uhrzeigersinn sein kann, wie über die Pfeile P3 und P4 gezeigt ist, ändert sich die entsprechende Bewegungsrichtung, die über die Pfeile P5 und P6 dargestellt ist.

Da jede Stelleinrichtungen 14 individuell betätigt werden kann, kann folglich eine separate, beidseitige Verstellung vorgenommen werden, was es erlaubt, dass der Messerträger 3 auch marginal um eine Vertikalachse verkippt werden kann, sodass ein im Bereich weniger Winkelsekunden oder Winkelminuten liegender Winkel zwischen den beiden Schneidkanten des Untermessers 5 und des Obermesser 6 entweder präzise eingestellt oder ausgeglichen werden kann, also die Schneidkanten wieder parallel gestellt werden können.

Jeder Stelleinrichtungen 14 ist eine Sensor 9 wiederum in Form eines Taststift 10 zugeordnet, sodass letztlich an beiden Stellpositionen der Bewegungsweg erfasst bzw. eine entsprechende Sensorsignale aufgenommen werden kann. Beide Sensorsignale werden der gemeinsamen Verarbeitungseinrichtung 11 zur Ermittlung der Weginformation gegeben, wobei die Verarbeitungseinrichtung 11 in diesem Fall bevorzugt zwei separate Weginformationen, die den einzelnen Stelleinrichtungen 14 zugeordnet sind, ermittelt und ausgibt.

Fig. 3 zeigt eine vergleichbare Schneideinrichtung 1, wie sie bereits in Fig. 2 dargestellt und erläutert wurde. Es wird auf die diesbezüglichen Ausführungen verwiesen. Der einzige Unterschied ist in diesem Fall, dass die Stellmittel 8 bzw. die beiden Stelleinrichtungen 14 hier motorisch, also automatisch betätigt werden, wozu jede Stelleinrichtungen 14 einen separat ansteuerbaren Stellmotor 17 mit zugeordnetem Getriebe 18 aufweist. Die Stelleinrichtungen 14 umfassen des Weiteren jeweilige Gewindespindeltriebe 19, wobei über den Stellmotor 17 und das Getriebe 18 entweder die Spindelmutter oder die Spindel selbst betätigt wird. Je nach Drehrichtung des jeweiligen Stellmotors 17, die auch hier wieder im und gegen den Uhrzeigersinn erfolgen kann, wie durch die Pfeile P3 und P4 angedeutet, ergibt sich auch hier eine Bewegung in Bandförderrichtung, siehe Pfeile P5, oder entgegen der Bandförderrichtung, siehe Pfeile P6.

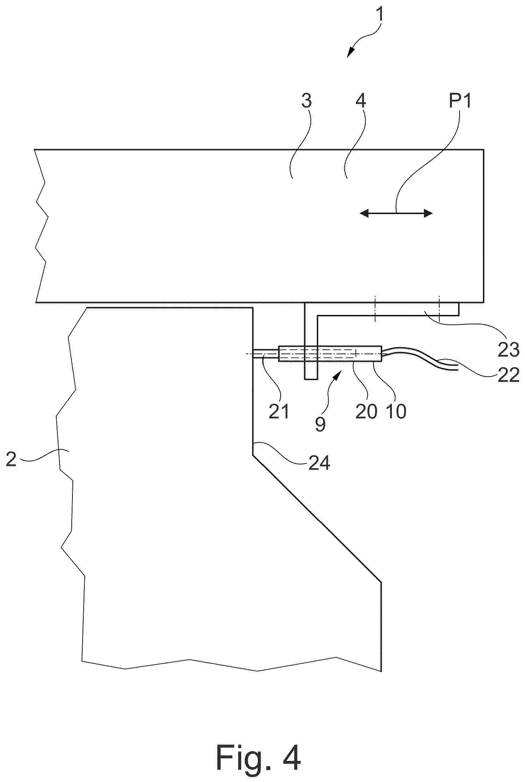

Fig. 4 zeigt eine Teilansicht der Schneideinrichtung 1, wobei ausschnittsweise der Messerträger 3 in Form der Tischplatte 4 sowie das Einrichtungsgestell 2 gezeigt ist. Wie der Doppelpfeil P1 anzeigt, ist der Messerträger 3 horizontal beweglich relativ zum positionsfesten Einrichtungsgestell 2, an dem der Messerträger 3 bzw. die Tischplatte 4 über geeignete Führungen geführt ist. Gezeigt ist ferner der Sensor 9 Form des Taststift 10, umfassend ein Gehäuse 20 sowie einen in und aus dem Gehäuse 20 bewegbar Stift 21, wobei natürlich zwei solcher Sensoren 9, wie vorstehend bereits beschrieben, vorgesehen sein können. Im Gehäuse 20 ist ein geeignetes Erfassungsmittel zur Erfassung der Position des Stifts 21 respektive dessen Bewegung integriert, dass das eigentliche, den Bewegungsweg beschreibende Sensorsignale liefert, das über eine Kommunikationsleitung 22 an die Verarbeitungseinrichtung 11 gegeben wird. Das Gehäuse 20 ist über einen Befestigungswinkel 23 mit dem Messerträger 3, hier der Tischplatte 4 verbunden, während der Stift 21 mit seiner Spitze an einer Lagerfläche 24 des Einrichtungsgestells 2 abgestützt ist. Kommt es zu einer Verschiebung der Tischplatte 4 relativ zum positionsfesten Einrichtungsgestell, wird, je nach Bewegungsrichtung, der Stift 21 in das Gehäuse 20 geschoben oder, da er z.B. über eine im Gehäuse vorgesehene Feder federbelastet ist, aus diesem herausgeschoben. Jedwede noch so marginale Stiftbewegung wird dabei über die Erfassungsmittel erfasst und über entsprechende Sensorsignale an die Verarbeitungseinrichtung 11 kommuniziert, die gestützt darauf eine entsprechende Weginformation ermittelt, die an der Anzeigeeinrichtung 12 ausgegeben wird.

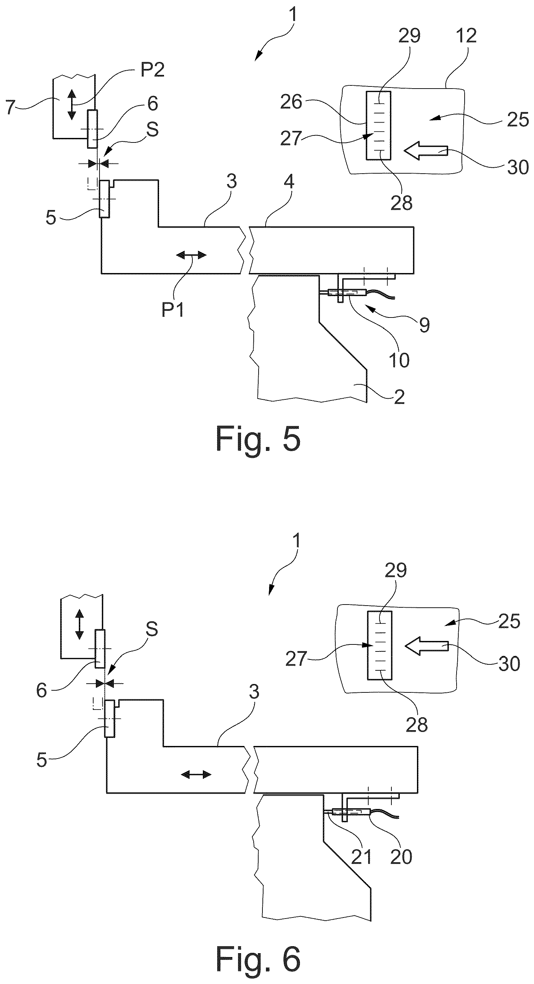

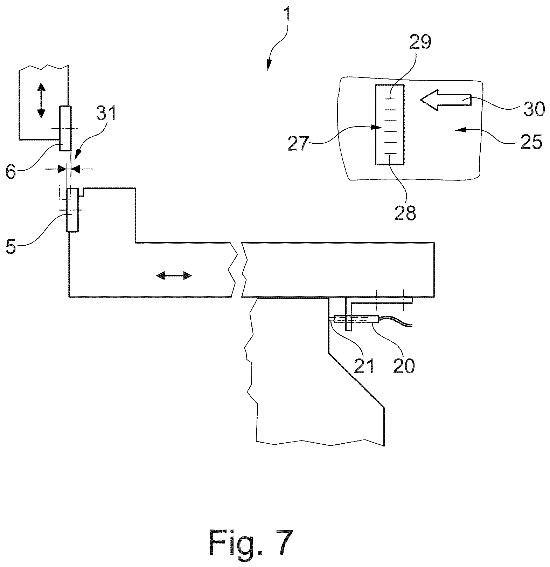

Die Figuren 5 - 7 zeigen exemplarisch ausschnittsweise eine Schneideinrichtung 1, von der der Messerträger 3 bzw. die Tischplatte 4 samt Untermesser 5, das Einrichtungsgestell 2, der weitere Messerträger 7 und das Obermesser 6 und der Schneidspalt S gezeigt sind. Ebenfalls gezeigt ist die Anzeigeeinrichtung 12, an der eine entsprechende, von der Verarbeitungseinrichtung 11 ermittelte Weginformation 25 hier in Form einer graphischen Darstellung wiedergegeben wird.

Bei der in Fig. 5 gezeigten Positionierungssituation ist ein Schneidspalt S gegeben, d. h., dass das Obermesser 6 beim Absenken seitlich neben dem Untermesser 5, über den Schneidspalt S getrennt, verfährt. Gezeigt ist ein Sensor 9 wiederum in Form eines Taststifts 10. Die Figuren 5 - 7 zeigen lediglich zu Erläuterungszwecken eine Verstellung, bei der ausgehend von einem in Fig. 5 gezeigten Schneidspalt das Untermesser 5 soweit verschoben wird, dass es zu einer Überdeckung mit dem Obermesser 6 käme, was im Betrieb natürlich nicht der Fall ist. Es soll hiermit lediglich der Verstellvorgang an sich sowie die Änderung der positionsabhängigen, dargestellten Weginformation in Form der grafischen Darstellung 25 erläutert werden.

Fig. 5 zeigt wie beschrieben die Ausgangssituation mit gegebenem Schneidspalt S. Wird nun mit der Verstellung begonnen, so wird entweder automatisch mit Beginn der ersten infinitesimalen Bewegung sogleich der Sensor 9 zugeschaltet, er liefert sofort und fortlaufend kontinuierlich entsprechende Sensorsignale, die zur Ermittlung der Weginformationen führen, die als grafische Darstellung 25 dargestellt wird. Alternativ kann natürlich auch über die Eingabe eines entsprechenden Befehls, den der Nutzer beispielsweise auch über die Anzeigeeinrichtung 12, die als Touchscreen ausgeführtes, geben kann, der Messbetrieb gestartet werden.

Exemplarisch ist eine Balkendarstellung 26 gezeigt, an der fortlaufend der gestellte Ist-Bewegungsweg angezeigt wird. Die Balkendarstellung 26 weist eine Skalierung 27 auf, wobei der unterste Skalierungswert 28 der Nullpunkt ist, während der obere Skalierungswert 29 der maximale Bewegungswegwert ist. Sei angenommen, dass der maximale Bewegungsweg 0,06 mm beträgt, so wäre der unterste Skalierungswert 28 0,0 mm, der oberste Skalierungswert 29 0,06 mm. Es kann beispielsweise in 0,01 mm-Schritten skaliert sein. Gezeigt ist des Weiteren eine Markierung 30, die den tatsächlichen Bewegungsweg anzeigt. Diese Markierung 30 ist hier als Pfeil gezeigt, sie deutet, da der Bestellvorgang gerade erst beginnt, letztlich auf den Nullpunkt, also den untersten Skalierungswert 28.

Es angenommen, dass der Messerträger 3 nach links bewegt wird, d. h., dass das Untermesser 5 zum Obermesser 6 bewegt wird. Dies führt dazu, dass sich der Schneidspalt S verkleinert bzw., siehe Fig. 6, letztlich auf 0 gesetzt ist, d. h., es ist quasi kein Spalt mehr gegeben, wenn das Obermesser 6 am Untermesser 5 vorbeibewegt wird. Innerhalb der grafischen Darstellung 25 ist diese Stellbewegung dargestellt, die Markierung 30 ist nach oben gewandert und zeigt nun, da angenommener Maßen eine Verstellung um 0,03 mm erfolgt ist, letztlich auf die Mitte der Skalierung 27. Der Stift 21 ist ersichtlich geringfügig in das Gehäuse 20 geschoben.

Wird in dieser Bewegungsrichtung die weitere Verstellung vorgenommen, so wird das Untermesser 5 in Überdeckung mit dem Obermesser 6 geschoben, d. h., dass beide einander überlappen, wie über die dargestellte Überlappung 31 angedeutet ist. Der Stift 21 ist noch weiter in das Gehäuse 20 verschoben. Auch diese Position wird natürlich hochpräzise erfasst und zeigt sich in der Darstellung 25. Ersichtlich ist die weitere Markierung 30 noch weiter nach oben gewandert, sie zeigt auf den obersten Skalierungswert 29, der den maximal zulässigen Stellweg von 0,06 mm anzeigt. Für die die Verstellung vornehmende Person wird damit eindeutig und sofort erfassbar gezeigt, dass die maximale Verstellung vorgenommen wurde und der Verstellvorgang zu beenden ist. Verbunden mit dem Erreichen des maximalen Stellwegs kann auch eine entsprechende farbliche Symbolisierung sein, d. h., dass die Anzeigeeinrichtung 12 beispielsweise rot leuchtet oder blinkt oder die Markierung 30 rot leuchtet oder blinkt, sodass hierüber quasi ein Warnsignal gegeben wird, dass die maximale Verstellung erreicht wurde. Auch wäre es denkbar, beispielsweise eine Art Ampelsystem hinsichtlich der Farbinformationsdarstellung vorzusehen. Bei einer Verstellung von beispielsweise 0,0 mm - 0,05 mm ist die Anzeigeeinrichtung grün hinterlegt oder die Markierung 30 grün dargestellt, bei einem größeren Bewegungsweg von mehr als 0,5 mm erfolgt ein Wechsel der Farbe auf Gelb, während sie mit Erreichen der maximalen Verstellung von 0,06 mm auf Rot wechselt. Hierüber wird der Person also zusätzlich eine Farbsignalisierung gegeben.

Wenngleich im beschriebenen Beispiel eine grafische Darstellung 25 zur Angabe der Weginformation gezeigt ist, ist es natürlich auch denkbar, konkrete Zahlenwerte, die den Ist-Bewegungsweg angeben, als Weginformation zu ermitteln und darzustellen. Es würde also statt der Balkendarstellung 26 ein entsprechender, sich kontinuierlich verändernder Zahlenwert dargestellt werden, der letztlich von 0,0 mm - 0,06 mm läuft, wenn dies die maximale Wegobergrenze ist. Auch hier kann natürlich eine entsprechende Farbinformation wie vorstehend beschrieben zusätzlich vorgesehen sein.

Denkbar ist es, dass die Verarbeitungseinrichtung 11 auch zur Ermittlung eines zu stellenden Bewegungswegs, der zum Erreichen einer idealen Breite des Schneidspalts S zu stellen ist, eingerichtet ist, welcher Bewegungsweg auch als Zahlenwert an der Anzeigeeinrichtung 12 zusätzlich ausgegeben werden kann.

Wie beschrieben, ermittelt die Person vorab mit einem optischen Messgerät die gegebene Ist-Breite des Schneidspalts S. Dieser Zahlenwert kann vom Anwender der Verarbeitungseinrichtung 11, beispielsweise über die Anzeigeeinrichtung 12, eingegeben werden, die daraufhin, beispielsweise auch unter Berücksichtigung spezifischer Materialparameter des zu schneidenden Bandmaterials, die ideale Spaltbreite ermittelt und den erforderlichen Bewegungsweg zum Erreichen dieser idealen Spaltbreite ausgehend von der Ist-Spaltbreite mit einem geeigneten Algorithmus ermittelt und diesen Wert dann anzeigt. So erhält die Fachperson, zusätzlich zu einer möglichen selbst durchgeführten Ermittlung des erforderlichen Bewegungswegs, auch eine systemseitige Information diesbezüglich. Die Person kann nun infolge der kontinuierlichen Erfassung des tatsächlichen Bewegungsweg genau erkennen, wann die Verstellung um die erforderliche Wegstrecke erfolgt ist.

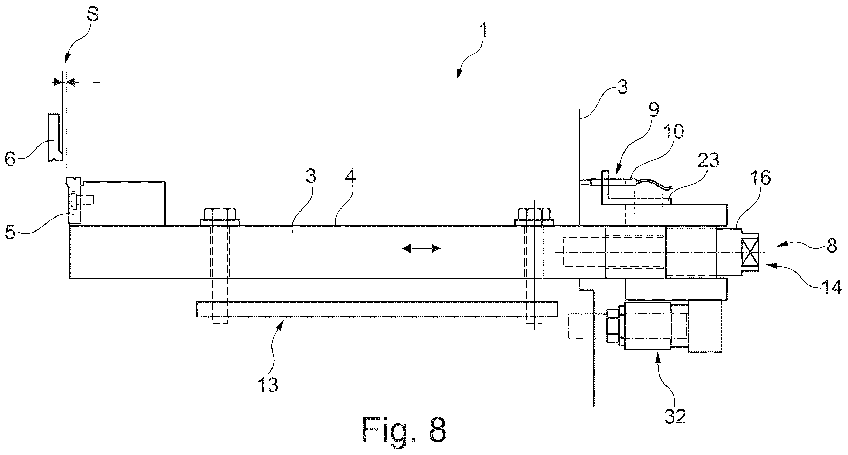

Fig. 8 zeigt eine Teilansicht einer Schneideinrichtung 1 in einer Seitenansicht, in der prinzipiell eine erste Ausgestaltung gezeigt ist. Dargestellt ist wiederum der Messerhalter 3 in Form der Tischplatte 4, die wie beschrieben bewegliche bzw. schwimmend gelagert ist und über entsprechende Feststellmittel 13 in ihrer Position fixiert bzw. verklemmt werden kann. Gezeigt sind auch das Untermesser 5 sowie das Obermesser 6 und der gegebene Schneidspalt S.

Ebenfalls gezeigt ist dem Grunde nach das Einrichtungsgestell 3 sowie ein Sensor 9 wiederum in Form eines Taststifts 10, der über den Befestigungswinkel 23 mit dem Messerträger 3 bzw. der Tischplatte 4 verbunden ist. Gezeigt ist ferner das Stellmittel 8 bzw. eine der beiden Stelleinrichtungen 14, die hier als manuelle Stellmittel 8 mit einer entsprechenden Stellmutter 16 dargestellt sind. Die Stelleinrichtungen 14 umfassen jeweils ein dem Grunde nach gezeigtes Federpaket 32, das am Einrichtungsgestell 3 abgestützt ist und gegen das die Tischplatte 4 bewegbar ist. Über dieses Federpaket 32 wird eine Vorspannung, die der Bewegung des Untermessers 5 in Richtung des Obermesser 6 entgegen gerichtet ist, aufgebaut, sodass das System vorgespannt ist, indem über die Stellmutter 16 gegen das Federpaket 32 gearbeitet wird, wenn das Untermesser 5 näher zum Obermesser 6 bewegt werden soll.

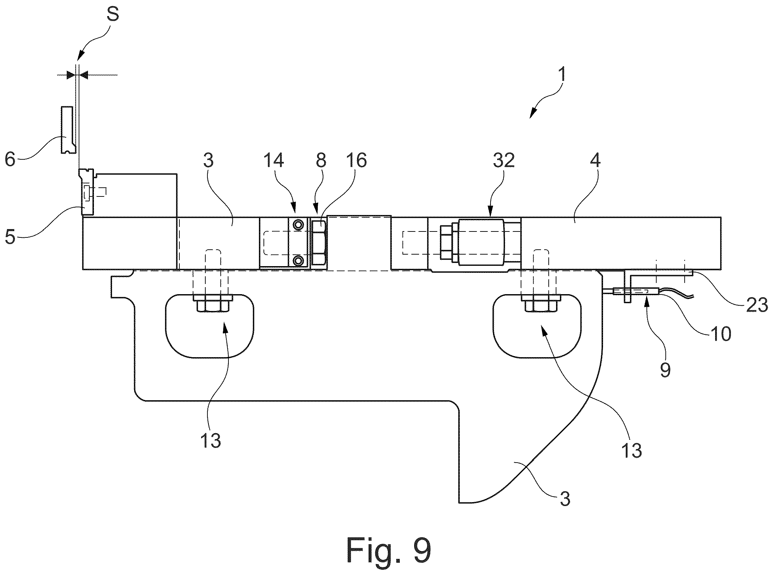

Fig. 9 zeigt eine Schneideinrichtung 1 einzelner Teilansicht, wobei hier wiederum der Messerträger 3 in Form der Tischplatte 4 gezeigt ist, wie auch die entsprechenden Feststellmittel 13, über die die Tischplatte 4 am Einrichtungsgestell 3 festgelegt wird. Ebenfalls gezeigt ist das Untermesser 5 sowie das Obermesser 6 und der Schneidspalt S. Bei dieser Ausgestaltung ist der Sensor 9, wiederum in Form eines Taststifts, unterhalb der Tischplatte 4 über den Befestigungswinkel 23 angeordnet, wobei an dieser Stelle darauf hinzuweisen ist, dass selbstständig auch andere Befestigungselemente als ein solcher verschraubter Befestigungsmittel 23 grundsätzlich bei allen Ausgestaltungen zur Positionierung und Befestigung des jeweiligen Senders 9 verwendet werden können.

Auch hier ist ein Stellmittel 8 vorgesehen, von dem wiederum nur eine Stelleinrichtung 14 gezeigt ist, die wiederum manuell zu betätigen ist und eine entsprechende Stellmutter 16 aufweist. Das auch hier vorgesehene Federpaket 32 ist quasi in Reihe mit der jeweiligen Stelleinrichtung 14 angeordnet. Die grundsätzliche Funktion ist jedoch die gleiche wie vorstehend zur Ausgestaltung nach Fig. 8 beschrieben.

## Patentansprüche

1. Schneideinrichtung zum Schneiden eines bandförmigen Materials, insbesondere eines klebrigen Cordbands, umfassend ein balkenförmiges Untermesser (5) und ein balkenförmiges Obermesser (6), das zum Schneiden vertikal bezüglich des positionsfesten Untermessers (5) bewegt wird, wobei das Untermesser (5) an einem Messerträger (3) angeordnet ist, welcher Messerträger (3) linear und horizontal bewegbar an einem Einrichtungsgestell (2) gelagert ist und über Stellmittel (8) linear derart bewegbar ist, dass die Position des Untermessers (5) relativ zum Obermesser (6) veränderbar und ein zwischen beiden gegebener Schneidspalt (S) einstellbar ist, sowie eine Einrichtung zur Erfassung der horizontalen Bewegung des Untermessers (5) relativ zum Obermesser (6), **dadurch gekennzeichnet, dass** die Einrichtung wenigstens einen Sensor (9) umfasst, über den ein, ein Maß für den über die Stellmittel (8) erwirkten Bewegungsweg des Messerträgers (3) darstellendes, Sensorsignal erfassbar und an eine Verarbeitungseinrichtung (11) gebbar ist, die zur Ermittlung einer den Bewegungsweg angebenden Weginformation basierend auf dem Sensorsignal eingerichtet ist, wobei die Weginformation an einer Anzeigeeinrichtung (12) ausgebbar ist.

2. Schneideinrichtung nach Anspruch 1, **dadurch gekennzeichnet, dass** das Sensorsignal automatisch bei Beginn einer über die Stellmittel erwirkten Stellbewegung erfassbar ist, oder dass das Sensorsignal bei über die Verarbeitungseinrichtung (11) erfolgender nutzerseitiger Gabe eines Erfassungsbefehls erfassbar ist.

3. Schneideinrichtung nach Anspruch 1 oder 2, **dadurch gekennzeichnet, dass** die Verarbeitungseinrichtung (11) zum Vergleichen des Sensorsignals oder der ermittelten Weginformation mit einem Referenzsignal oder einer Referenzinformation und zur Ausgabe des Vergleichsergebnisses an der Anzeigeeinrichtung eingerichtet ist.

4. Schneideinrichtung nach einem der vorangehenden Ansprüche, **dadurch gekennzeichnet, dass** die Weginformation als Zahlenwert oder als graphische Darstellung (25) an der Anzeigeeinrichtung (12) ausgebbar ist.

5. Schneideinrichtung nach einem der vorangehenden Ansprüche, **dadurch gekennzeichnet, dass** die Verarbeitungseinrichtung (12) für eine Veränderung des Schneidspalts (S) zur Ermittlung einer mittels der Stellmittel zu erwirkenden Bewegungslänge zum Verstellen des Untermessers (5) eingerichtet ist, die an der Anzeigeeinrichtung ausgebbar ist.

6. Schneideinrichtung nach einem der vorangehenden Ansprüche, **dadurch gekennzeichnet, dass** die Stellmittel (8) zwei separate Stelleinrichtungen (14) umfassen, die mit dem Messerträger (3) im Bereich seiner seitlichen Enden gekoppelt und die separat betätigbar sind.

7. Schneideinrichtung nach Anspruch 6, **dadurch gekennzeichnet, dass** die Stelleinrichtungen (14) Spindeln (15) mit manuell zu betätigenden Stellmuttern (16) oder über einen jeweiligen Stellmotor (17) betätigbare Spindeltriebe (19) sind.

8. Schneideinrichtung nach einem der vorangehenden Ansprüche, **dadurch gekennzeichnet, dass** zwei Sensoren (9) vorgesehen sind, die horizontal voneinander beabstandet sind.

9. Schneideinrichtung nach einem der vorangehenden Ansprüche, **dadurch gekennzeichnet, dass** der oder jeder Sensor (9) ein Taststift (10) umfassend ein Gehäuse (20) sowie einen relativ zum Gehäuse (20) bewegbarer Stift (21) ist, oder dass der oder jeder Sensor (9) ein lichtoptischer Sensor umfassend ein Gehäuse mit einem einen Abtastlichtstrahl emittierenden und ein Reflexionslicht erfassenden Einrichtung ist.

10. Schneideinrichtung nach Anspruch 9, **dadurch gekennzeichnet, dass** das Gehäuse (20) mit dem Messerträger (3) verbunden ist und der Stift (21) am Einrichtungsgestell (2) anliegt oder der Abtastlichtstrahl auf das Einrichtungsgestell trifft, oder umgekehrt.

11. Schneideinrichtung nach einem der vorangehenden Ansprüche, **dadurch gekennzeichnet, dass** Feststellmittel (13) vorgesehen sind, über die der linear bewegbare Messerträger (3) in seiner Position relativ zum Einrichtungsgestell (2) feststellbar ist.

12. Schneideinrichtung nach Anspruch **11, dadurch gekennzeichnet, dass** die Feststellmittel (13) mechanisch oder hydraulisch betätigbare Klemmmittel sind.

13. Verfahren zur Einstellung eines Schneidspalts zwischen einem Obermesser (6) und einem Untermesser (5) einer Schneideinrichtung (1) zum Schneiden eines bandförmigen Materials, insbesondere eines klebrigen Cordbands, wobei die Schneideinrichtung (1) ein balkenförmiges Untermesser (5) und ein balkenförmiges Obermesser (6), das zum Schneiden vertikal bezüglich des positionsfesten Untermessers (5) bewegt wird, umfasst, wobei das Untermesser (5) an einem Messerträger (3) angeordnet ist, welcher Messerträger (3) linear und horizontal bewegbar an einem Einrichtungsgestell (2) gelagert ist und über Stellmittel (8) linear derart bewegbar ist, dass die Position des Untermessers (5) relativ zum Obermesser (6) veränderbar und ein zwischen beiden gegebener Schneidspalt (S) einstellbar ist, sowie eine Einrichtung zur Erfassung der horizontalen Bewegung des Untermessers (5) relativ zum Obermesser (6) zur Einstellung der Breite des Schneidspalts (S), **dadurch gekennzeichnet, dass** mittels wenigstens eines Sensors (9) der Einrichtung ein ein Maß für den über die Stellmittel (8) erwirkten Bewegungsweg des Messerträgers (3) darstellendes Sensorsignal erfasst wird und an eine Verarbeitungseinrichtung (11) gegeben wird, die eine den Bewegungsweg angebende Weginformation basierend auf dem Sensorsignal ermittelt, wobei die Weginformation an einer Anzeigeeinrichtung (12) ausgegeben wird.

14. Verfahren nach Anspruch 13 **dadurch gekennzeichnet, dass** das Sensorsignal automatisch bei Beginn einer Stellbewegung erfasst wird, oder dass das Sensorsignal bei über die Verarbeitungseinrichtung (11) erfolgender nutzerseitiger Gabe eines Erfassungsbefehls erfasst wird.

15. Verfahren nach Anspruch 13 oder 14, **dadurch gekennzeichnet, dass** seitens der Verarbeitungseinrichtung (11) das Sensorsignal oder die ermittelte Weginformation mit einem Referenzsignal oder einer Referenzinformation verglichen und das Vergleichsergebnis an der Anzeigeeinrichtung (12) ausgegeben wird.

16. Verfahren nach einem der Ansprüche 13 bis 15, **dadurch gekennzeichnet, dass** die Weginformation als Zahlenwert oder als graphische Darstellung an der Anzeigeeinrichtung (12) ausgegeben wird.

17. Verfahren nach einem der Ansprüche 13 bis 16, **dadurch gekennzeichnet, dass** seitens der Verarbeitungseinrichtung (11) die für eine Veränderung des Schneidspalts (S) mittels der Stellmittel zu erwirkenden Bewegungslänge zum Verstellen des Untermessers (5) ermittelt wird, die an der Anzeigeeinrichtung (12) ausgegeben wird.

18. Verfahren nach einem der Ansprüche 13 bis 17, **dadurch gekennzeichnet, dass** als Sensor (9) ein Taststift (10) umfassend ein Gehäuse (20) sowie einen relativ zum Gehäuse (20) bewegbaren Stift (21) verwendet wird, oder dass als Sensor (9) ein lichtoptischer Sensor umfassend ein Gehäuse mit einer einen Abtastlichtstrahl emittierenden und ein Reflexionslicht erfassenden Einrichtung verwendet wird.
